# EUROPEAN PATENT APPLICATION

(11) **EP 4 697 313 A1**
(43) Date of publication of application: **18.02.2026**
(21) Application number: 24838358.0
(22) Date of filing: 22.03.2024
(51) Int. Cl.: G09G 3/34

(54) **BACKLIGHT ADJUSTMENT METHOD AND APPARATUS**

(30) Priority: 12.07.2023 CN 202310862049
(71) Applicant: Honor Device Co., Ltd., Shenzhen, Guangdong 518040 (CN)
(72) Inventor: LIU, Peixin, Shenzhen, Guangdong 518040 (CN)
(74) Representative: Gill Jennings & Every LLP
(86) International application number: PCT/CN2024/083387
(87) International publication number: WO 2025/011098

(57) **Abstract**

Embodiments of this application provide a backlight adjustment method and apparatus. The method includes: displaying an nth image frame, where when the nth image frame is displayed, a backlight value of a terminal device is a first backlight value, and a pulse quantity within a unit time in a pulse adjustment PWM signal used by the terminal device for backlight adjustment is a first pulse quantity; and displaying an (n+1)th image frame, where when the (n+1)th image frame is displayed, a backlight value of the terminal device is a second backlight value, and a pulse quantity within a unit time in a PWM signal used by the terminal device for backlight adjustment is a second pulse quantity. In this way, when detecting that a backlight value changes, the terminal device can reduce a pulse quantity while adding transition backlight, to alleviate a problem of an abrupt change in screen brightness, thereby implementing smooth transition of the screen brightness.

## Description

This application claims priority to Chinese Patent Application No. 202310862049.7, filed with the China National Intellectual Property Administration on July 12, 2023 and entitled "BACKLIGHT ADJUSTMENT METHOD AND APPARATUS", which is incorporated herein by reference in its entirety.

### TECHNICAL FIELD

This application relates to the field of terminal technologies, and in particular, to a backlight adjustment method and apparatus.

### BACKGROUND

With popularization and development of the Internet, people have increasingly diversified requirements on functions of terminal devices. For example, to meet use requirements of a user on a device screen, a terminal device may support backlight brightness adjustment, and a picture effect presented by the terminal device may better meet visual perception of the user through the backlight brightness adjustment.

Usually, to implement reasonable backlight adjustment, the terminal device may perform backlight adjustment by using a DC dimming strategy when the terminal device detects that backlight brightness is within a range from highest screen brightness to mid-low screen brightness. For example, a driving current flowing through an organic light-emitting material is reduced to control light-emitting efficiency, thereby adjusting the backlight brightness. The terminal device performs backlight adjustment by using a PWM dimming strategy when the terminal device detects that the backlight brightness is within a range from the mid-low screen brightness to lowest screen brightness. For example, the backlight brightness is adjusted by reducing a screen-on ratio, that is, a duty (duty) value. The highest screen brightness may be about 1000 nits or the like, the mid-low screen brightness may be about 70 nits or the like, and the lowest screen brightness may be about 2 nits or the like.

However, the foregoing backlight adjustment method may cause a problem of an abrupt change in screen brightness.

### SUMMARY

Embodiments of this application provide a backlight adjustment method and apparatus, to reduce a pulse quantity while adding transition backlight during transition between a DC dimming strategy and a PWM dimming strategy, so that a problem of an abrupt change in screen brightness can be alleviated, thereby implementing smooth transition of the screen brightness.

According to a first aspect, an embodiment of this application provides a backlight adjustment method, applied to a terminal device. The method includes: displaying an nth image frame, where when the nth image frame is displayed, a backlight value of the terminal device is a first backlight value, and a pulse quantity within a unit time in a pulse adjustment PWM signal used by the terminal device for backlight adjustment is a first pulse quantity; and displaying an (n+1)th image frame, where when the (n+1)th image frame is displayed, a backlight value of the terminal device is a second backlight value, and a pulse quantity within a unit time in a PWM signal used by the terminal device for backlight adjustment is a second pulse quantity; and the second pulse quantity is less than the first pulse quantity, the second backlight value is not equal to the first backlight value, the second backlight value belongs to a preset backlight interval, a minimum value of the preset backlight interval is a minimum backlight value that is allowed to be adjusted when backlight adjustment is performed through direct current DC dimming, and a maximum value of the preset backlight interval is a maximum backlight value that is allowed to be adjusted when backlight adjustment is implemented through PWM dimming. In this way, when detecting that a backlight value changes, the terminal device can reduce a pulse quantity while adding transition backlight, to alleviate a problem of an abrupt change in screen brightness, thereby implementing smooth transition of the screen brightness.

That the second backlight value is not equal to the first backlight value, and the second backlight value belongs to a preset backlight interval may be understood as that the terminal device enters the preset backlight interval.

In a possible implementation, the method further includes: displaying an (n+2)th image frame, where when the (n+2)th image frame is displayed, a backlight value of the terminal device is a third backlight value, a pulse quantity within a unit time in a PWM signal used by the terminal device for backlight adjustment is a third pulse quantity, the third pulse quantity is greater than the second pulse quantity, the second backlight value is not equal to the third backlight value, and the third backlight value does not belong to the preset backlight interval. In this way, when determining that the terminal device is far away from the preset backlight interval, the terminal device may increase the pulse quantity, to implement flexible pulse adjustment.

In a possible implementation, a frame rate of the terminal device is a first frame rate when the nth image frame is displayed; a frame rate of the terminal device is a second frame rate when the (n+1)th image frame is displayed; a frame rate of the terminal device is a third frame rate when the (n+2)th image frame is displayed; the first frame rate is equal to the third frame rate; and the method further includes: displaying an (n+3)th image frame, where when the (n+3)th image frame is displayed, a backlight value of the terminal device is a fourth backlight value, a pulse quantity within a unit time in a PWM signal used by the terminal device for backlight adjustment is a fourth pulse quantity, and a frame rate of the terminal device is a fourth frame rate; and the fourth frame rate is less than the third frame rate, the fourth pulse quantity is greater than the third pulse quantity, the fourth backlight value is not equal to the third backlight value, and the fourth backlight value belongs to the preset backlight interval. In this way, when detecting that a frame rate changes, the terminal device may properly adjust a pulse quantity based on a change situation of the frame rate, so that a frame rate change and a pulse change meet the terminal device supporting high-frequency PWM dimming of 3840 Hz, thereby reducing screen refresh rate abnormalities.

In a possible implementation, the third frame rate is in a first frame rate interval, the fourth frame rate is in a second frame rate interval, the first frame rate interval includes 120 hertz and does not include 90 hertz, and the second frame rate interval includes 90 hertz and does not include 120 hertz.

The third frame rate may be a basic frame rate described in embodiments of this application, and the fourth frame rate may be an extend frame rate described in the embodiments of this application.

In a possible implementation, the method further includes: displaying an (n+4)th image frame, where when the (n+4)th image frame is displayed, a backlight value of the terminal device is a fifth backlight value, a pulse quantity within a unit time in a PWM signal used by the terminal device for backlight adjustment is a fifth pulse quantity, the fifth backlight value belongs to the preset backlight interval, and the fifth pulse quantity is equal to the fourth pulse quantity. In this way, the terminal device may not adjust the pulse quantity when determining that the fifth backlight value is in the preset backlight interval.

In a possible implementation, the terminal device includes a liquid crystal display kit, and the method includes: The liquid crystal display kit adjusts the first pulse quantity to the second pulse quantity based on the first backlight value and the second backlight value; and the liquid crystal display kit delivers the second pulse quantity to a display driver integrated circuit. It may be understood that the liquid crystal display kit may adjust the pulse quantity and deliver the pulse quantity, so that the display driver integrated circuit can adjust a display picture based on the pulse quantity.

In a possible implementation, the terminal device is a device supporting high-frequency PWM dimming of 3840 Hz.

According to a second aspect, an embodiment of this application provides a backlight adjustment apparatus. The apparatus includes a display unit and a processing unit. The display unit is configured to display an nth image frame, where when the nth image frame is displayed, a backlight value of a terminal device is a first backlight value, and a pulse quantity within a unit time in a pulse adjustment PWM signal used by the terminal device for backlight adjustment is a first pulse quantity. The display unit is further configured to display an (n+1)th image frame, where when the (n+1)th image frame is displayed, a backlight value of the terminal device is a second backlight value, and a pulse quantity within a unit time in a PWM signal used by the terminal device for backlight adjustment is a second pulse quantity. The second pulse quantity is less than the first pulse quantity, the second backlight value is not equal to the first backlight value, the second backlight value belongs to a preset backlight interval, a minimum value of the preset backlight interval is a minimum backlight value that is allowed to be adjusted when backlight adjustment is performed through direct current DC dimming, and a maximum value of the preset backlight interval is a maximum backlight value that is allowed to be adjusted when backlight adjustment is implemented through PWM dimming.

According to a third aspect, an embodiment of this application provides a terminal device, including a processor and a memory. The memory is configured to store code instructions, and the processor is configured to run the code instructions, so that the terminal device is enabled to perform the method according to the first aspect or any implementation of the first aspect.

According to a fourth aspect, an embodiment of this application provides a computer-readable storage medium. The computer-readable storage medium stores instructions, and when the instructions are executed, a terminal device is enabled to perform the method according to the first aspect or any implementation of the first aspect.

According to a fifth aspect, a computer program product is provided, including a computer program, where when the computer program is run, a terminal device is enabled to perform the method according to the first aspect or any implementation of the first aspect.

It should be understood that the technical solutions of the third aspect to the fifth aspect of this application correspond to the technical solutions of the first aspect of this application, and beneficial effects achieved by the aspects and corresponding feasible implementations are similar. Details are not described herein again.

### BRIEF DESCRIPTION OF DRAWINGS

FIG. 1A, FIG. 1B, FIG. 1C, and FIG. 1D are a schematic diagram of a scenario according to an embodiment of this application;
FIG. 2 is a schematic diagram of a pulse change according to an embodiment of this application;
FIG. 3 is a schematic diagram of a trace according to an embodiment of this application;
FIG. 4 is a schematic diagram of a hardware structure of a terminal device according to an embodiment of this application;
FIG. 5 is a schematic diagram of a software structure of a terminal device according to an embodiment of this application;
FIG. 6 is a schematic flowchart of a backlight adjustment method according to an embodiment of this application;
FIG. 7 is a schematic diagram of switching states from a DC dimming strategy to a PWM dimming strategy according to an embodiment of this application;
FIG. 8 is a schematic diagram of a waveform of an extend frame rate according to an embodiment of this application;
FIG. 9 is a schematic diagram of a waveform of a basic frame rate according to an embodiment of this application;
FIG. 10 is a schematic diagram of module interaction in a backlight adjustment method according to an embodiment of this application;
FIG. 11 is a schematic flowchart of another backlight adjustment method according to an embodiment of this application;
FIG. 12 is a schematic diagram of module interaction in another backlight adjustment method according to an embodiment of this application;
FIG. 13 is a schematic diagram of a structure of a synchronous playing apparatus according to an embodiment of this application; and
FIG. 14 is a schematic diagram of a hardware structure of another terminal device according to an embodiment of this application.

### DESCRIPTION OF EMBODIMENTS

To clearly describe the technical solutions in embodiments of this application, terms mentioned in the embodiments of this application are explained as follows:

### 1. Direct current (direct current, DC)

In the display field, the DC represents a method of controlling brightness by manipulating a current or voltage flowing through a light-emitting unit.

In a stage in which a terminal device implements backlight control based on a DC dimming strategy, a screen-on ratio, that is, a duty value, may usually be a fixed value.

### 2. Pulse width modulation (pulse width modulation, PWM)

In the display field, the PWM represents a method of controlling brightness by adjusting an on/off state ratio (duty) of the light-emitting unit.

In a stage in which the terminal device implements backlight control based on a PWM dimming strategy, a current or voltage of the light-emitting unit may usually be a fixed value.

It may be understood that when a rapidly changing image is seen, the rapidly changing image is processed into a smooth image because of a persistence of vision effect of a human eye. Therefore, the terminal device may control an on/off ratio of a screen to reduce a brightness integral value per unit time, thereby reducing brightness. In the stage of implementing the backlight control based on the PWM dimming strategy, visible brightness of the screen to the human eyes decreases as a screen-on ratio decreases.

### 3. Pulse (pulse)

The pulse may be a basic constituent unit of PWM adjustment. Within a unit time, more pulses indicate a lower screen-on ratio in a scenario in which pulse widths are the same. Within a unit time, a larger pulse width indicates a lower screen-on ratio when a quantity of pulses is constant.

### 3. Duty (duty)

A duty value may be used to refer to the screen-on ratio. A larger duty value indicates a larger screen-on ratio and higher screen brightness; and a smaller duty value indicates a smaller screen-on ratio and lower screen brightness.

### 4. Low temperature poly-silicon (low temperature poly-silicon, LTPS)

The LTPS is a type of thin film transistor (thin film transistor, TFT) technology. A screen driven by the LTPS has advantages such as a fast response speed, high resolution, and low power consumption. Therefore, the screen driven by the LTPS is widely used by screen manufacturers.

### 5. Low temperature polysilicon oxide (low temperature polysilicon oxide, LTPO)

The LTPO corresponds to the LTPS. Compared with the LTPS-TFT technology, an LTPO technology uses an oxide TFT to replace some LTPS TFTs with large leakage currents, where an LTPS TFT with high mobility drives an OLED, and the oxide TFT is configured to control a switch circuit. Carrier mobility of the LTPO technology is higher, so that a size of a gate driver circuit can be reduced, thereby implementing high resolution of a screen, and reducing a driving voltage to implement lower power consumption. In addition, a leakage current of the LTPO is low, further enabling reduction in screen power consumption and enabling the screen to operate at a lower screen refresh rate, for example, 10 Hz and 1 Hz. These refresh rates cannot be implemented by the LTPS-TFT technology.

### 6. Organic light-emitting diode (organic light-emitting diode, OLED)

Currently, mainstream medium- and high-end models generally use a screen that is made of an OLED material. Compared with an LED screen, the OLED screen has advantages such as low brightness, no light leakage, high contrast, and high color resolution.

### 7. Display driver integrated circuit (display driver IC, DDIC)

The DDIC is usually matched with a screen module, and is configured to customize a power supply setting and a timing setting of a screen panel and support decompression of a display data stream and transmission of the display data stream to the panel for display. Generally, a screen driver technology refers to receiving a signal sent by a system on chip (system on chip, SOC) through a mobile industry processor interface (mobile industry processor interface, MIPI) or another bus, decoding the signal, re-encoding/modulating/mapping the signal into a data stream according to a feature of a specific display device, converting the data stream into dynamic voltages by a 6/8/10-bit digital-to-analog converter (DAC) (one set for each of red, green, and blue), and charging corresponding TFTs or other gate control capacitors with the dynamic voltages through a mux switch under the control of horizontal synchronization signals (related to a frame rate and resolution).

### 8. Screen-off and screen-on

Screen-off may be understood as powering off a display screen of the terminal device. When the terminal device is screen-off, brightness of the display screen of the terminal device is less than preset brightness. Screen-on may be understood as powering on the display screen of the terminal device. When the terminal device is screen-on, the brightness of the display screen of the terminal device is higher than the preset brightness. Power-on may be understood as a current greater than a preset current value, and power-off may be understood as a current less than the preset current value.

For example, it may be understood that the terminal device is in a screen-off state when a backlight value of the terminal device is 0.

### 9. Terminal device

The display screen of the terminal device described in embodiments of this application may be a screen that carries a 3840-Hz high-frequency PWM dimming feature and supports an LTPO feature. An eye protection screen with 3840-Hz high-frequency PWM dimming may be an eye protection screen with zero-risk dimming, and the screen is TÜV Rheinland flicker-free certified.

As defined in the Institute of Electrical and Electronics Engineers (Institute of Electrical and Electronics Engineers, IEEE) standard 1789-2015 regarding a correlation between a flicker risk level and a flicker frequency, a higher frequency indicates a lower flicker and less harm to human eyes. A frequency of 1250 Hz indicates a low-risk level, and a dimming frequency higher than 3125 Hz indicates a flicker-free hazard level. Therefore, the display screen mentioned in the embodiments of this application may be a screen with LTPO features that reaches the flicker-free hazard level.

It may be understood that on/off of a pixel unit actually refers to charging/discharging the light-emitting unit through the switch circuit. For an OLED screen with a high-frequency PWM solution, especially a screen using the LTPO technology, to maintain brightness at a lower frame rate without jittering, pixel charging of the OLED screen needs to be more adequate, and pulse charging time of the OLED screen needs to be met.

In the embodiments of this application, words such as "first" and "second" are used to distinguish between same items or similar items with basically same functions and effects. For example, a first value and a second value are merely used to distinguish between different values, but not used to limit a sequence thereof. A person skilled in the art may understand that the words such as "first" and "second" do not limit a quantity or an execution sequence, and the words such as "first" and "second" do not define a definite difference.

It should be noted that in this application, the words such as "example" or "for example" are used to represent giving an example, an illustration, or a description. Any embodiment or design solution described as "example" or "for example" in this application should not be construed as being preferred or advantageous over other embodiments or design solutions. Exactly, use of the words such as "example" or "for example" is intended to present a related concept in a specific manner.

In this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including any combination of a single item or a plurality of items. For example, at least one of a, b, or c may represent a, b, c, a and b, a and c, b and c, or a, b, and c, where a, b, and c may be singular or plural.

Usually, to implement reasonable backlight adjustment, the terminal device may perform backlight adjustment by using a DC dimming strategy when the terminal device detects that backlight brightness is within a range from highest screen brightness to mid-low screen brightness. For example, a driving current flowing through an organic light-emitting material is reduced to control light-emitting efficiency, thereby adjusting the backlight brightness. The terminal device performs backlight adjustment by using a PWM dimming strategy when the terminal device detects that the backlight brightness is within a range from the mid-low screen brightness to lowest screen brightness. For example, the backlight brightness is adjusted by reducing a screen-on ratio, that is, a duty (duty) value.

The PWM dimming strategy is used because of poor panel uniformity of an OLED screen at an extremely low current, which may cause abnormal display problems such as a mura (mura). Therefore, in the PWM dimming strategy, a current value may be fixed, but the screen-on ratio is reduced, that is, the duty value is reduced, to adjust the backlight brightness.

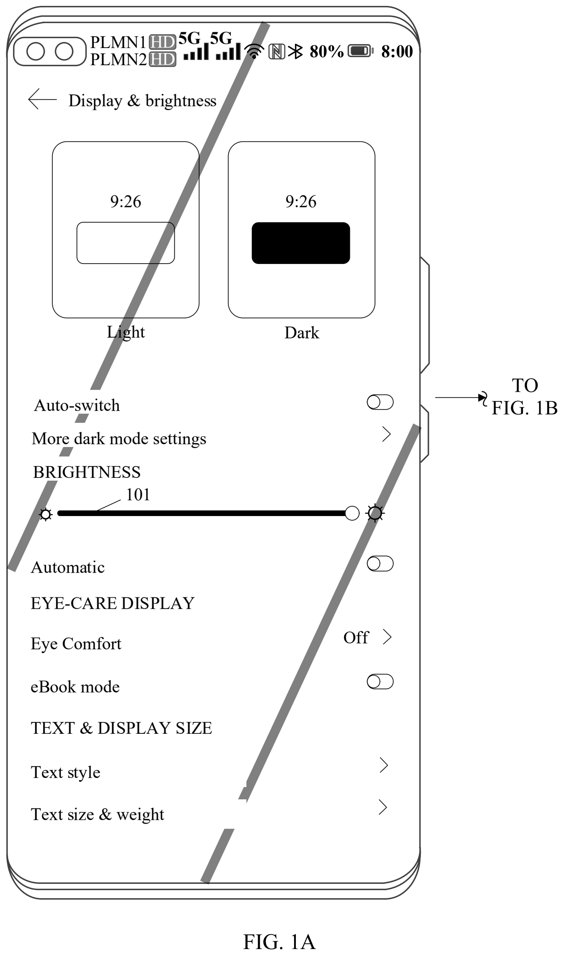

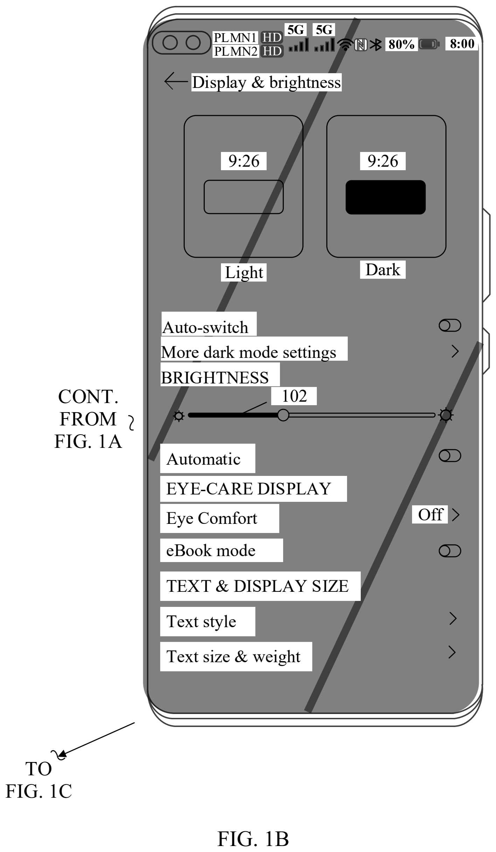

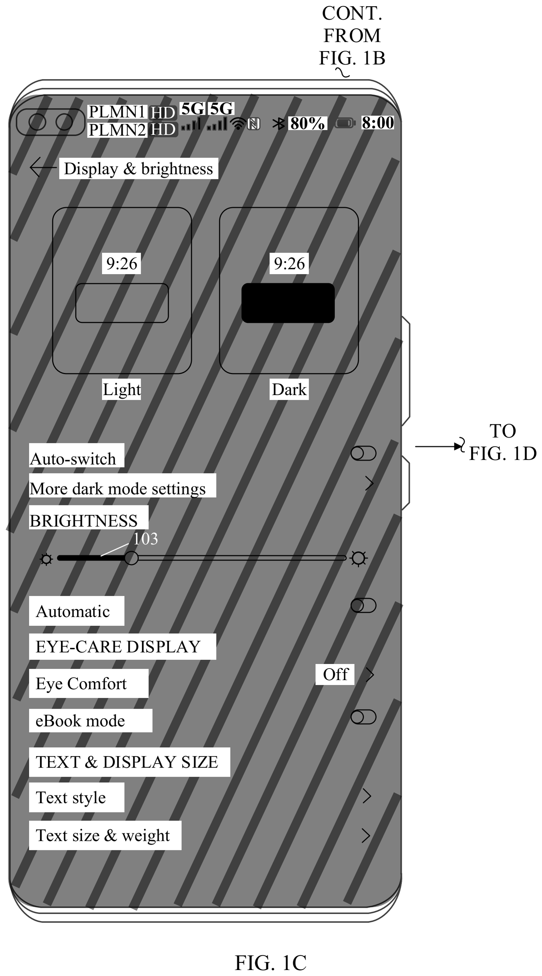

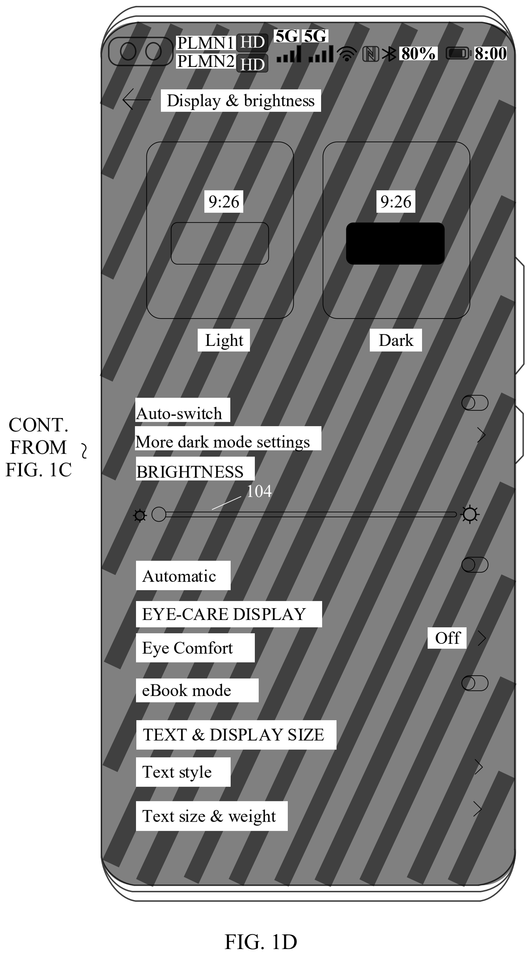

For example, a scenario in which embodiments of this application are applied is described with reference to an embodiment corresponding to FIG. 1A, FIG. 1B, FIG. 1C, and FIG. 1D. FIG. 1A, FIG. 1B, FIG. 1C, and FIG. 1D are a schematic diagram of a scenario according to an embodiment of this application. In the embodiment corresponding to FIG. 1A, FIG. 1B, FIG. 1C, and FIG. 1D, an example in which a terminal device is a mobile phone is used for description. This example does not constitute a limitation on this embodiment of this application.

It may be understood that any display picture in FIG. 1A, FIG. 1B, FIG. 1C, and FIG. 1D may be obtained by photographing a display screen of the terminal device by using a high-speed camera.

In response to backlight brightness of the terminal device changing from high to low, the terminal device may sequentially display a picture shown in FIG. 1A, a picture shown in FIG. 1B, a picture shown in FIG. 1C, and a picture shown in FIG. 1D.

FIG. 1A may show a picture displayed by the terminal device when the terminal device performs backlight adjustment based on a DC dimming strategy in a case that the backlight brightness is first brightness, and the first brightness may be brightness indicated when a brightness progress bar is at 101. FIG. 1B may show a picture displayed by the terminal device when the terminal device performs backlight adjustment based on the DC dimming strategy in a case that the backlight brightness is second brightness, and the second brightness may be brightness indicated when a brightness progress bar is at 102. A flicker in the picture shown in FIG. 1A and in the picture shown in FIG. 1B may correspond to a pulse in the DC dimming strategy. The first brightness is greater than the second brightness.

FIG. 1C may show a picture displayed by the terminal device when the terminal device performs backlight adjustment based on a PWM dimming strategy in a case that the backlight brightness is third brightness, and the third brightness may be brightness indicated when a brightness progress bar is at 103. FIG. 1D may show a picture displayed by the terminal device when the terminal device performs backlight adjustment based on the PWM dimming strategy in a case that the backlight brightness is fourth brightness, and the fourth brightness may be brightness indicated when a brightness progress bar is at 104. A flicker in the picture shown in FIG. 1C and in the picture shown in FIG. 1D may correspond to a pulse in the PWM dimming strategy, and a width of any pulse in the picture shown in FIG. 1C may be less than a width of any pulse in the interface shown in FIG. 1D. The second brightness is greater than the third brightness, and the third brightness is greater than the fourth brightness.

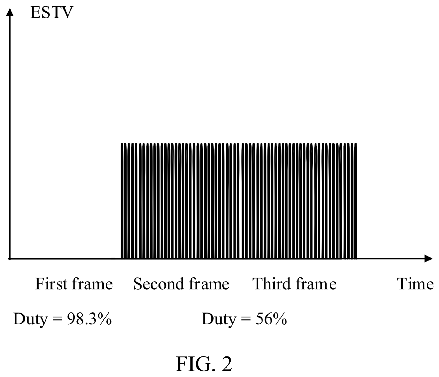

It may be understood that for a pulse change situation in different stages, refer to the embodiment corresponding to FIG. 2. For example, FIG. 2 is a schematic diagram of a pulse change according to an embodiment of this application. FIG. 2 shows on and off of pixel units of a screen, where the screen is turned on at a low level and is turned off at a high level. It can be learned that changes in a screen-on ratio is: Almost turned on → the screen-on ratio decreased by a small magnitude → the screen-on ratio decreased by a large magnitude.

It may be determined by testing the picture shown in FIG. 1B that a duty value of the display screen may be 98.3%, for example, a stage corresponding to a first frame in FIG. 2. It may be determined by testing the picture shown in FIG. 1C that a duty value of the display screen may be 58%, for example, a stage corresponding to a second frame in FIG. 2.

It may be understood that the duty value of the display screen may be abruptly changed from 98.3% to 58% during transition between the DC dimming strategy and the PWM dimming strategy. In this case, a user subjectively feels a flicker problem due to the abrupt change in the backlight brightness.

Specifically, a reason why the backlight brightness of the terminal device cannot be smoothly transitioned between the DC dimming strategy and the PWM dimming strategy may be that the current DC dimming strategy and PWM dimming strategy do not perform the backlight adjustments in a manner of traversing backlight brightness levels, but perform the backlight adjustments in a stepped manner. For example, the terminal device may deliver a backlight value in the stepped manner according to a plurality of preset backlight values when the terminal device detects that the backlight value changes. The delivered backlight value may be a display brightness value (display brightness value, DBV) of backlight, and there is a one-to-one correspondence between the DBV and nit.

An example in which the delivered backlight value is the DBV is used for description. For example, the terminal device may sequentially deliver DBVs such as 1210, 1204, 1199, 1193, 1186, 1181, 1176, 1171, 1164, 1162, 1159, 1153, 1147, and 1140 based on a preset rule and a gradual change situation of the backlight brightness. When the terminal device determines that a DBV used for transition between the DC dimming strategy and the PWM dimming strategy is 1183, the terminal device can only deliver values such as 1186 and 1181 because the terminal device can only deliver the backlight based on the preset DBVs. In processes of delivering 1186 and 1181, there may be a problem of an abrupt change in a screen-on ratio.

Therefore, the terminal device may add transition backlight during transition between backlight adjustment performed based on the DC dimming strategy and backlight adjustment performed based on the PWM dimming strategy. Specifically, the terminal device obtains a new backlight value, determines whether both a backlight value of a previous frame and the new backlight value are greater than a transition backlight value, and replaces the new backlight value with the transition backlight value when it is determined that both the backlight value of a previous frame and the new backlight value are greater than a preset backlight value, so that the terminal device can deliver the transition backlight value and displays an interface based on the transition backlight value.

However, in the foregoing backlight adjustment method, it is difficult to implement smooth transition of a screen-on ratio of a display screen only by adding the transition backlight value. This is because a DDIC in the terminal device cannot perform active pulse switching while delivering the transition backlight value. The screen-on ratio does not change if there is no pulse switching.

In addition, in the terminal device, there is coupling between pulse settings and an extend (extend) frame rate. Therefore, when backlight value switching and pulse switching are implemented, a real-time frame rate change situation needs to be distinguished, and instruction delivery needs to be performed. When the terminal device does not consider the frame rate change situation, a screen refresh rate abnormality occurs in the terminal device.

"There is coupling between pulse settings and an extend frame rate" may be understood as that high-frequency PWM dimming of a screen is controlled by setting a pulse quantity per frame. For example, when the screen of the terminal device uses 3840 Hz, a control manner of 3840 Hertz is to make a setting of generating 32 pulses per frame, and calculate a pulse quantity per second to be 120 frames/second * 32/frame = 3840/second. In this way, a PWM frequency of 3840 Hz is obtained. For a screen with a fixed PWM refresh rate, time of each pulse is fixed. Therefore, the extend frame rate is derived.

The extend frame rate refers to a manner of obtaining a frame rate different from a basic frequency by increasing a pulse quantity per frame on the basis of the basic frame rate. In the embodiments of this application, 120 Hz is a basic frame rate, and 90 Hz is an extend frame rate. A manner of obtaining 90 Hz is to extend by 10 pulses based on 32 pulses per frame at 120 Hz. It may be understood that a one-to-one correspondence exists between an actual extend frame rate and a pulse quantity. The basic frame rate may meet a first frame rate range, for example, a range such as 100 Hz-130 Hz, and the extend frame rate may meet a second frame rate range, for example, a range such as 80 Hz-100 Hz.

It may be understood that a transition backlight value is added during transition between the DC dimming strategy and the PWM dimming strategy. A transition manner of backlight brightness is to reduce a pulse quantity. However, reduction of the pulse quantity affects the extend frame rate. In this case, a corresponding extend frame rate should also be changed to extend setting of a frame quantity. Because a current DDIC cannot identify different brightness or frame rates to perform autonomous pulse and extend setting switching, a brightness delivery behavior and a frame rate switching behavior need to be captured, to enable the terminal device to perform corresponding logic control.

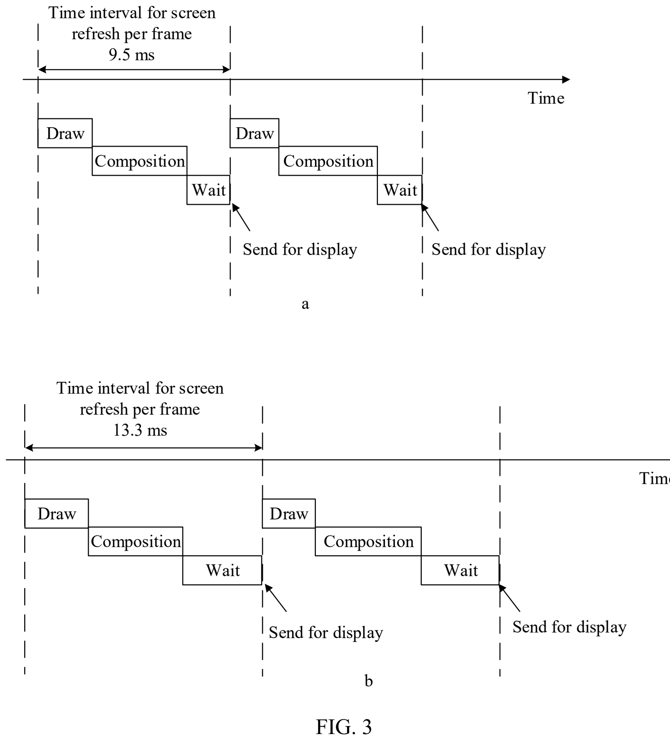

For example, the embodiments of this application provide two screen refresh rate abnormality examples. FIG. 3 is a schematic diagram of a trace according to an embodiment of this application.

Example 1: An example in which a trace of a scenario is captured is used for description. A current screen refresh rate level is medium, and a normal screen refresh rate should be 90 Hz. An actual screen refresh rate = 1/refresh time interval per frame = 1/0.0095 ≈ 105 Hz. "A screen refresh rate level is medium" may be understood as that the screen refresh rate is 90 Hz.

As shown in a in FIG. 3, because the DDIC cannot autonomously switch back to a corresponding configuration when returning to a DC stage from a PWM stage for adjustment, frame rate calculation is (120*32)/(32+5) = 103 Hz, and correspondingly, a screen refresh interval is about 9.5 ms per frame.

It may be understood that, because the actually calculated screen refresh rate is higher than the normal screen refresh rate, power consumption of the terminal device may be increased due to a screen refresh rate abnormality.

Example 2: An example in which a trace of a scenario is captured is used for description. A current refresh rate level is medium, and a normal screen refresh rate should be 90 Hz. An actual screen refresh rate = 1/refresh time interval per frame = 1/0.0133 ≈ 75 Hz.

As shown in b in FIG. 3, because the DDIC cannot autonomously switch back to a corresponding configuration when returning to a DC stage from a PWM stage for adjustment, frame rate calculation is 120*16/(16+10) = 73 Hz, and correspondingly, a TE period interval is about 13.3 ms.

It may be understood that, because the actually calculated screen refresh rate is lower than the normal screen refresh rate, a screen refresh rate abnormality may cause performance abnormality problems such as stuttering of the terminal device.

In view of this, an embodiment of this application provides a backlight adjustment method, so that a terminal device can deliver a transition pulse bound with a transition backlight value while delivering the transition backlight value, to implement smooth transition of the screen-on ratio by using the transition pulse.

It may be understood that the terminal device may also be referred to as a terminal (terminal), user equipment (user equipment, UE), a mobile station (mobile station, MS), a mobile terminal (mobile terminal, MT), and the like. The terminal device may be a mobile phone (mobile phone) with a touchscreen, a smart TV, a wearable device, a tablet computer (Pad), a computer with a wireless sending/receiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in the embodiments of this application.

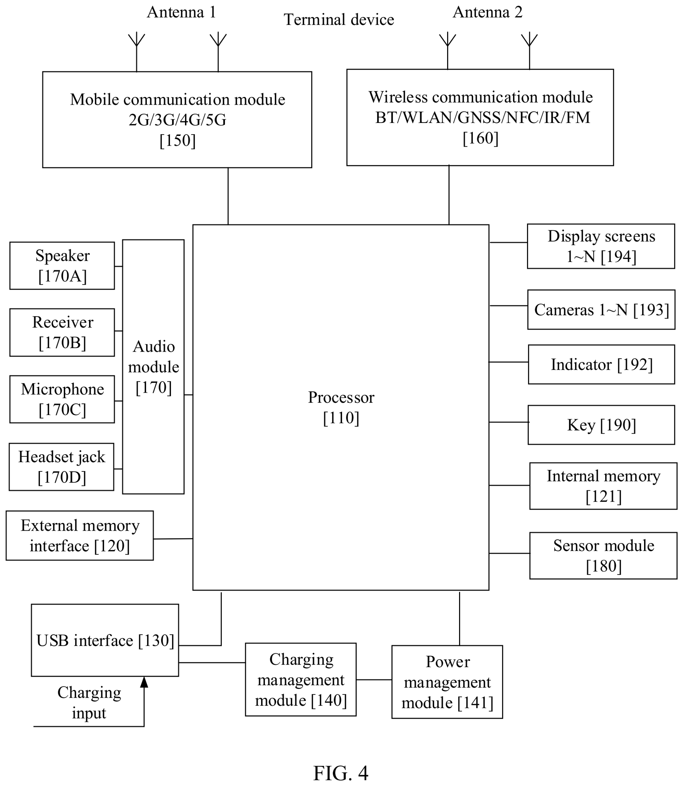

Therefore, to better understand the embodiments of this application, the following describes a structure of the terminal device in the embodiments of this application. For example, FIG. 4 is a schematic diagram of a structure of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a key 190, an indicator 192, a camera 193, a display screen 194, and the like.

The sensor module 180 may include one or more of the following: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, or the like (not shown in FIG. 4).

It may be understood that the structure shown in this embodiment of this application does not constitute a specific limitation on the terminal device. In some other embodiments of this application, the terminal device may include more or fewer parts than those shown in the figure, some parts may be combined, some parts may be split, or a different part arrangement may be used. The parts shown in the figure may be implemented by hardware, software, or a combination of software and hardware.

The processor 110 may include one or more processing units. Different processing units may be independent components or may be integrated into one or more processors. A memory may be further disposed in the processor 110 to store instructions and data.

The USB interface 130 is an interface that complies with USB standard specifications, and may be specifically a Mini USB interface, a Micro USB interface, a USB Type C interface, or the like. The USB interface 130 may be configured to be connected to a charger to charge the terminal device, may be configured to transmit data between the terminal device and a peripheral device, or may be configured to be connected to a headset to play audio through the headset. The interface may alternatively be configured to be connected to another electronic device, for example, an AR device.

The charging management module 140 is configured to receive a charging input from a charger. The charger may be a wireless charger or a wired charger. The power management module 141 is configured to be connected to the charging management module 140 and the processor 110.

A wireless communication function of the terminal device may be implemented by using the antenna 1, the antenna 2, the mobile communication module 150, the wireless communication module 160, a modem processor, a baseband processor, and the like.

The antenna 1 and the antenna 2 are configured to transmit and receive electromagnetic wave signals. An antenna in the terminal device may be configured to cover one or more communication frequency bands. Different antennas may be further multiplexed to improve antenna utilization.

The mobile communication module 150 may provide a solution for wireless communication that is applied to the terminal device and that includes 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation.

The wireless communication module 160 may provide a solution for wireless communication that is applied to the terminal device and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), and the like.

The terminal device implements a display function by using a GPU, the display screen 194, the application processor, and the like. The GPU is a microprocessor for image processing, and is connected to the display screen 194 and the application processor. The GPU is configured to perform mathematical and geometric computing for graphics rendering.

The display screen 194 is configured to display an image, a video, and the like. The display screen 194 includes a display panel. In some embodiments, the terminal device may include 1 or N display screens 194, where N is a positive integer greater than 1.

The terminal device may implement a shooting function by using an ISP, the camera 193, a video codec, the GPU, the display screen 194, the application processor, and the like.

The camera 193 is configured to capture a still image or a video. In some embodiments, the terminal device may include 1 or N cameras 193, where N is a positive integer greater than 1.

The external memory interface 120 may be configured to be connected to an external memory card such as a Micro SD card, to expand a storage capacity of the terminal device. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The internal memory 121 may include a program storage area and a data storage area.

The terminal device may implement an audio function, for example, music play and recording, by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The speaker 170A, also referred to as a "loudspeaker", is configured to convert an audio electrical signal into a sound signal. The terminal device may be used to listen to music or answer a call in a hands-free mode by using the speaker 170A. The receiver 170B, also referred to as an "earpiece", is configured to convert an audio electrical signal into a sound signal. When the terminal device receives a call or a voice message, the receiver 170B may be placed close to a human ear to receive the voice. The headset jack 170D is configured to be connected to a wired headset. The microphone 170C, also referred to as a "mic" or "mike", is configured to convert a sound signal into an electrical signal. In the embodiments of this application, the terminal device may have one microphone 170C.

The pressure sensor is configured to sense a pressure signal, and may convert the pressure signal into an electrical signal. In some embodiments, the pressure sensor may be disposed on the display screen 194. The gyroscope sensor may be configured to determine a motion posture of the terminal device. The barometric pressure sensor is configured to measure barometric pressure. The magnetic sensor includes a Hall sensor. The acceleration sensor may detect magnitudes of accelerations in all directions (usually on three axes) of the terminal device. The distance sensor is configured to measure a distance. The optical proximity sensor may include, for example, a light-emitting diode (LED) and an optical detector, for example, a photodiode. The ambient light sensor is configured to sense ambient light brightness. The fingerprint sensor is configured to collect a fingerprint. The temperature sensor is configured to detect a temperature. The touch sensor is also referred to as a "touch control device". The bone conduction sensor may obtain a vibration signal.

The touch sensor may be disposed on the display screen 194. The touch sensor and the display screen 194 form a touchscreen, which is also referred to as a "touch control screen". In this embodiment of this application, a capacitive sensing node grid (hereinafter referred to as a capacitive sensor) may be disposed in the touchscreen. The terminal device may determine that a touch operation occurs when the terminal device determines that a value of a capacitance in at least one grid that is received by the capacitive sensor exceeds a capacitance threshold. Further, the terminal device may determine a touch area corresponding to the touch operation based on an area occupied by the at least one grid that exceeds the capacitance threshold.

The key 190 includes a power key, a volume key, or the like. The key 190 may be a mechanical key, or may be a touch key. The terminal device may receive a key input, and generate a key signal input related to user settings and function control of the terminal device. The indicator 192 may be an indicator light, may be configured to indicate a charging status or a power change, and may be further configured to indicate a message, a missed incoming call, a notification, and the like.

A software system of the terminal device may use a layered architecture, an event-driven architecture, a microkernel architecture, a microservice architecture, a cloud architecture, or the like. Details are not described herein again.

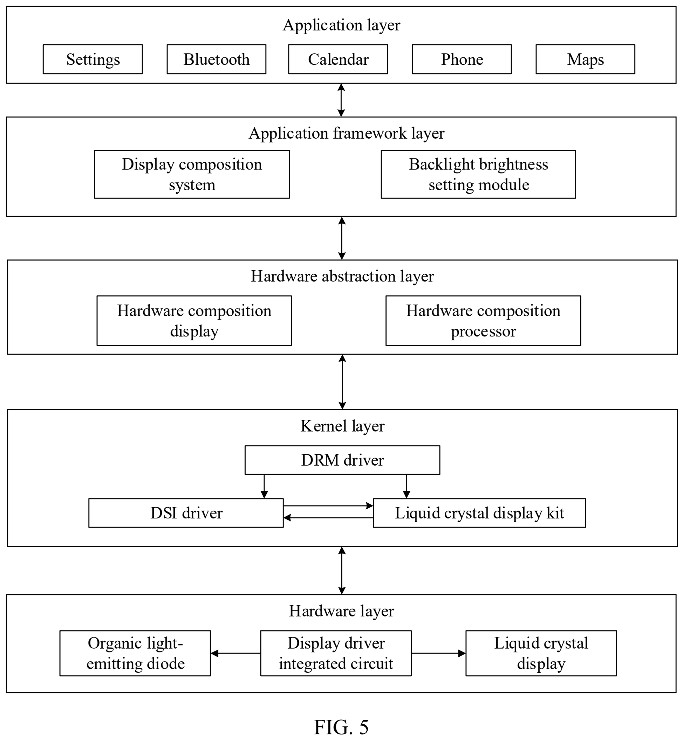

For example, FIG. 5 is a schematic diagram of a software structure of a terminal device according to an embodiment of this application. As shown in FIG. 5, the layered architecture divides software into several layers, and each layer has a clear role and task. Layers communicate with each other through a software interface. In some embodiments, an android system is divided into a plurality of layers from top to bottom: an application (application, APP) layer, an application framework (framework) layer, a hardware abstraction layer (hardware abstraction layer, HAL), a kernel (kernel) layer, a hardware (hardware) layer, and the like. This is not limited in this embodiment of this application.

The application layer may include a series of application packages. The application packages may include one or more of the following: Settings, Bluetooth, Calendar, Phone, Maps, or the like. This is not limited in this embodiment of this application.

The application framework layer provides an application programming interface (application programming interface, API) and a programming framework for an application at the application layer. The application framework layer includes some predefined interfaces. The application framework layer may include one or more of the following: a display composition system (surface flinger), a backlight brightness setting module (framework backlight), or the like.

In this embodiment of this application, the display composition system is configured to composite received layer data, and is configured to deliver a frame rate of a device. For example, the display composition system may deliver a frame rate to a hardware composition processor or a hardware composition display when the display composition system detects that a frame rate changes.

The backlight brightness setting module is configured to deliver a backlight value. For example, the backlight brightness setting module may deliver a new backlight value to the hardware composition processor or the hardware composition display when the backlight brightness setting module detects that a backlight value changes.

In some embodiments, the application framework layer may include a window manager, a content provider, a resource manager, a view system, a notification manager, and the like (not shown in FIG. 5).

The window manager is configured to manage a window program. The window manager may obtain a size of a display screen, determine whether there is a status bar, lock a screen, touch a screen, drag a screen, capture a screenshot, and the like. The content provider is configured to store and obtain data, and enable the data to be accessible to an application. The data may include a video, an image, audio, calls that are made and answered, a browsing history and bookmarks, a phone book, and the like. The view system includes visual controls, for example, a control for displaying a text and a control for displaying a picture. The view system may be configured to build an application. A display interface may include one or more views. For example, a display interface including an SMS message notification icon may include a view for displaying a text and a view for displaying a picture. The resource manager provides various resources for an application, for example, a localized string, an icon, a picture, a layout file, and a video file.

An objective of the hardware abstraction layer is to abstract hardware, so as to provide a unified interface for querying a hardware device for an upper-layer application, or provide a data storage service for an upper-layer application. The hardware abstraction layer may include one or more of the following: the hardware composition display (hardware display) or the hardware composition processor (hardware composer, HWC).

In this embodiment of this application, the hardware composition display or the hardware composition processor is configured to deliver an obtained backlight value or frame rate to a DRM (direct rendering manager) driver.

The kernel layer is a layer between hardware and software. The kernel layer is used to drive hardware, so that the hardware works. The kernel layer may include one or more of the following: the DRM driver, a display serial interface (display serial interface, DSI) driver, or a liquid crystal display kit (liquid crystal display kit, LCD kit).

The DRM driver may be a subsystem in a kernel. The DRM driver provides a mechanism that enables a user-space program to directly access graphics hardware. Main functions of the DRM is to manage resources of the graphics hardware, including a video memory, a command queue, an interruption, and the like, and to provide a set of APIs to enable the user-space program to interact with the graphics hardware.

In this embodiment of this application, the DRM driver is configured to transmit a value such as a received backlight value or frame rate to the DSI driver. The DSI driver is configured to transmit the value such as the backlight value or frame rate that is received from the DRM driver to the liquid crystal display kit. The liquid crystal display kit may preset a transition backlight value (or referred to as a preset backlight value), and determine whether to deliver the received backlight value based on the preset backlight value.

In this embodiment of this application, the liquid crystal display kit may further determine how to perform pulse and frame rate switching based on change situations of backlight brightness and the frame rate.

The hardware layer may include one or more of the following: an OLED, a DDIC, an LCD, or the like.

In this embodiment of this application, the DDIC is configured to convert the received backlight value into an electrical signal, and transmit the electrical signal to the OLED or the LCD through a mobile industry processor interface (mobile industry processor interface, MIPI).

With reference to the embodiment corresponding to FIG. 5, usually, a backlight delivery process may be as follows: The backlight brightness setting module may generate a new backlight value when the backlight brightness setting module detects that a backlight value changes, and deliver the new backlight value to the DRM driver by using the hardware composition processor or the hardware composition display. The DRM driver delivers the new backlight value to a display driver integrated circuit by using the DSI driver, and the display driver integrated circuit may convert the new backlight value into an electrical signal and deliver the electrical signal to a display such as the OLED or the LCD through the MIPI, so that the display can display an interface based on the new backlight value.

It may be understood that the software architecture provided in this embodiment of this application is merely an example, and the terminal device may also include another layer and/or module. This is not limited in this embodiment of this application.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

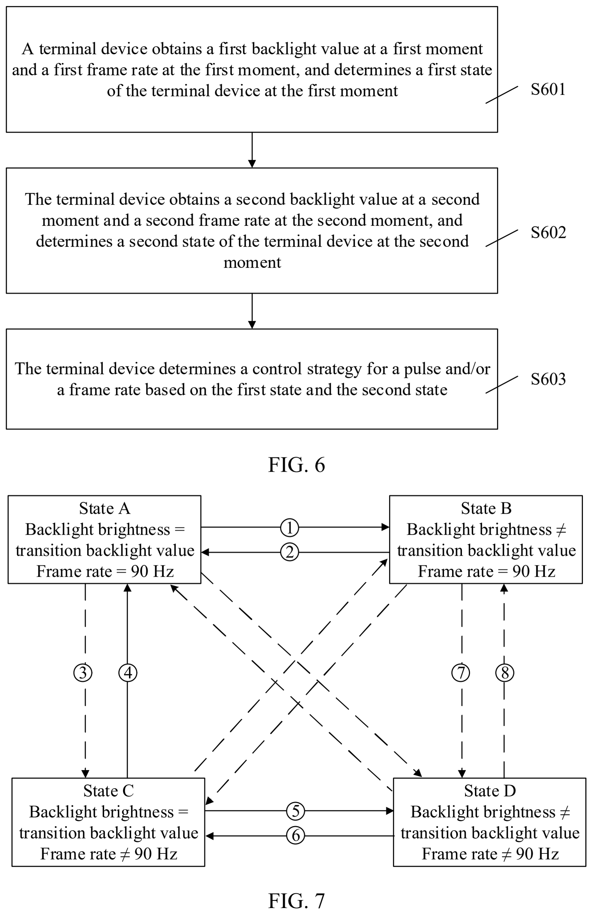

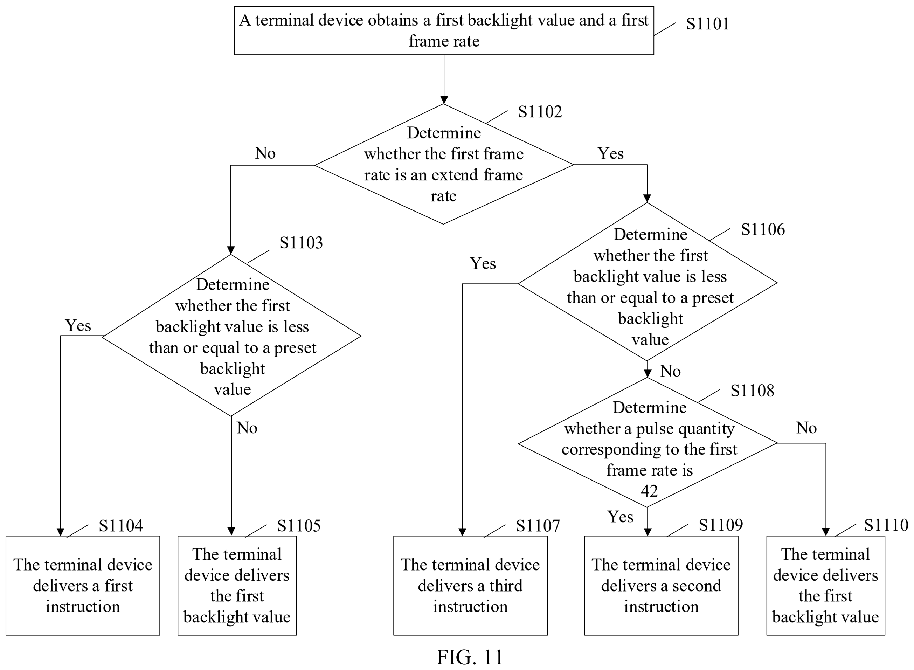

Embodiments of this application may provide two backlight adjustment methods. A method 1 is that a terminal device determines a switching strategy for an extend frame rate and a pulse based on a state switching solution (refer to an embodiment corresponding to FIG. 6-FIG. 10). A method 2 is that a terminal device determines a switching strategy for an extend frame rate and a pulse through scenario identification (refer to an embodiment corresponding to FIG. 11-FIG. 12).

Method 1: The terminal device determines the switching strategy for an extend frame rate and a pulse based on the state switching solution.

For example, FIG. 6 is a schematic flowchart of a backlight adjustment method according to an embodiment of this application. In the embodiment corresponding to FIG. 6, correspondences between switching states and control strategies may be preset in the terminal device. The control strategies may include a pulse configuration and/or an extend frame rate configuration.

As shown in FIG. 6, the backlight adjustment method may include the following steps.

S601: The terminal device obtains a first backlight value at a first moment and a first frame rate at the first moment, and determines a first state of the terminal device at the first moment.

The first frame rate may be generated when the terminal device detects that a frame rate changes at the first moment, or may be determined by the terminal device based on a buffered frame rate. When detecting that the frame rate changes, the terminal device may generate a new frame rate and buffer the new frame rate. For example, the terminal device may deliver the first frame rate before the first moment (for example, at a third moment), and buffer the first frame rate into the device. When the terminal device detects that a backlight value changes at the first moment and does not detect that the frame rate changes at the first moment, the terminal device may obtain the first frame rate from a buffer. It may be understood that the frame rate does not change from the third moment to the first moment.

The first backlight value may also be generated when the terminal device detects that the backlight value changes at the first moment, or may be determined by the terminal device based on the buffered backlight value.

For example, when the terminal device detects that the backlight value changes at the first moment or detects that the frame rate changes at the first moment, the terminal device generates the first backlight value at the first moment and the first frame rate at the first moment. The terminal device may determine that the backlight value changes when the terminal device detects that a user performs an operation of adjusting backlight brightness (for example, the embodiment corresponding to FIG. 1A, FIG. 1B, FIG. 1C, and FIG. 1D) or when the terminal device detects that brightness of ambient light changes by using a component such as an ambient light sensor, and generate the first backlight value. The terminal device may determine, when detecting that an interface is switched, an application is switched, or the like, that the frame rate changes, and generate the first frame rate. Manners in which the backlight value changes and the frame rate changes are not limited in this embodiment of this application.

The first state may be one of four preset states of the terminal device. The terminal device determines a state of the terminal device based on the first backlight value and the first frame rate. For example, FIG. 7 is a schematic diagram of switching states from a DC dimming strategy to a PWM dimming strategy according to an embodiment of this application.

As shown in FIG. 7, the four preset states may include a state A, a state B, a state C, and a state D. The state A may be: backlight brightness = a transition backlight value, and a frame rate = 90 Hz. The state B may be: backlight brightness ≠ a transition backlight value, and a frame rate = 90 Hz. The state C may be: backlight brightness = a transition backlight value, and a frame rate ≠ 90 Hz. The state D may be: backlight brightness ≠ a transition backlight value, and a frame rate ≠ 90 Hz.

The transition backlight value may also be referred to as a preset backlight value. A value of the preset backlight value may be a value such as 75 nits. The backlight brightness may be the first backlight value or a second backlight value described in this embodiment of this application. 90 Hz may be an extend frame rate of the terminal device.

As shown in FIG. 7, a state switching behavior on a diagonal line is actually implemented by superimposing two states in ①-⑧. For example, switching from the state A to the state D may be ① + ⑦ or ③ + ⑤.

S602: The terminal device obtains a second backlight value at a second moment and a second frame rate at the second moment, and determines a second state of the terminal device at the second moment.

The second moment is before the first moment. For example, the second moment may be a frame before the first moment. For example, if the first moment is a second frame, the second moment may be a first frame.

It may be understood that because the terminal device may buffer a backlight value of each frame and a frame rate of each frame, or buffer a frame rate generated when a frame rate changes and a backlight value generated when a backlight value changes, the terminal device may obtain the second backlight value at the second moment and the second frame rate at the second moment from the buffer.

The second state may be one of the four preset states of the terminal device. The terminal device may switch from the second state to the first state, and a switching state may meet at least one of eight switching states described in the embodiment corresponding to FIG. 7.

S603: The terminal device determines a control strategy for a pulse and/or a frame rate based on the first state and the second state.

The correspondences between the switching states and the control strategies may be preset in the terminal device. The switching states may include the eight switching states mainly described in FIG. 7. The control strategies may include the pulse configuration and/or the extend frame rate configuration. For example, the correspondences between the switching states and the control strategies may include one or more of the following:
①. The state A → the state B, the frame rate =90 Hz, and the backlight brightness deviates from the transition backlight value. The control strategy may be that a pulse quantity switches from 21 to 42.
②. The state B → the state A, the frame rate = 90 Hz, and the backlight brightness enters the transition backlight value. The control strategy may be that a pulse quantity switches from 42 to 21.
③. The state A → the state C, the frame rate switches from 90 Hz to non-90 Hz, and the backlight brightness = the transition backlight value. There is no control strategy.
④. The state C → the state A, the frame rate switches from non-90 Hz to 90 Hz, and the backlight brightness = the transition backlight value. The control strategy may be that a pulse quantity switches from 32 to 21.
⑤. The state C → the state D, the frame rate ≠ 90 Hz, and the backlight brightness deviates from the transition backlight value. The control strategy may be that a pulse quantity switches from 16 to 32.
⑥. The state D → the state C, the frame rate ≠ 90 Hz, and the backlight brightness deviates from the transition backlight value. The control strategy may be that a pulse quantity switches from 32 to 16.
⑦. The state B → the state D, the frame rate switches from 90 Hz to non-90 Hz, and the backlight brightness ≠ the transition backlight value. There is no control strategy.
⑧. The state D → the state B, the frame rate switches from non-90 Hz to 90 Hz, and the backlight brightness ≠ the transition backlight value. There is no control strategy.

There are control strategies in ①, ②, ④, ⑤, and ⑥, and there is no control strategy in ③, ⑦, and ⑧.

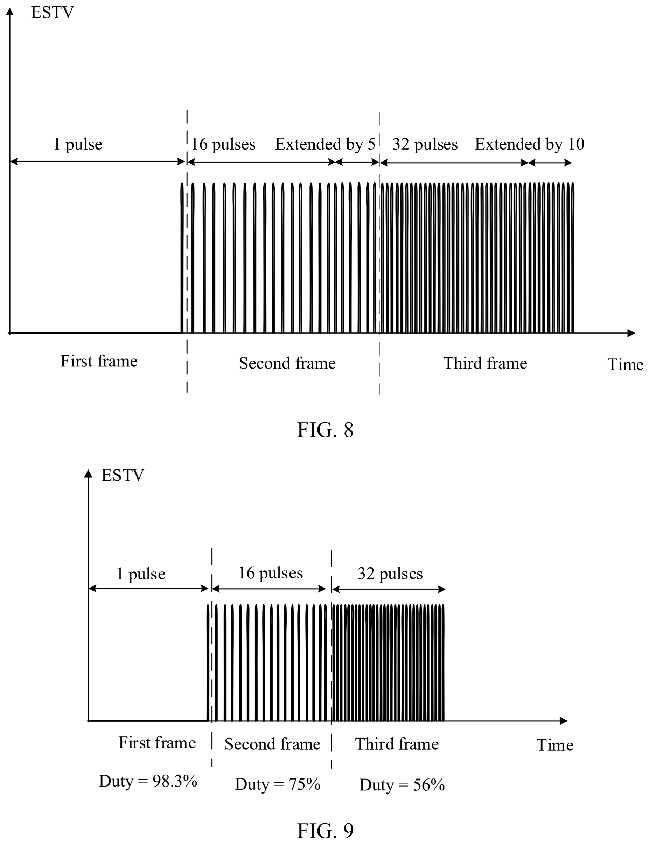

For example, when the terminal device is at the extend frame rate, for example, the frame rate is 90 Hz, for a pulse change situation, refer to the embodiment corresponding to FIG. 8. FIG. 8 is a schematic diagram of a waveform of an extend frame rate according to an embodiment of this application.

As shown in FIG. 8, a first frame may be in a DC dimming strategy stage; a second frame may be in a transition stage between a DC dimming strategy and a PWM dimming strategy, and a pulse quantity may be 16+5, that is, 21; and a third frame may be in a PWM dimming strategy stage, and a pulse quantity may be 32+10, that is, 42.

For example, when the terminal device is at a non-extend frame rate, for example, the frame rate is a basic frame rate of 120 Hz, for a pulse change situation, refer to an embodiment corresponding to FIG. 9. FIG. 9 is a schematic diagram of a waveform of a basic frame rate according to an embodiment of this application.

As shown in FIG. 9, a first frame may be in a DC dimming strategy stage, and a duty value corresponding to the first frame may be 98.3%; a second frame may be in a transition stage between a DC dimming strategy and a PWM dimming strategy, a pulse quantity may be 16, and a duty value corresponding to the second frame may be 75%; and a third frame may be in a PWM dimming strategy stage, a pulse quantity may be 32, and a duty value corresponding to the third frame may be 56%.

It may be understood that the terminal device may deliver, based on the first state and the second state when determining that the backlight brightness enters transition backlight and the frame rate is the extend frame rate, for example, the frame rate is 90 Hz, a transition pulse bound with the transition backlight value, thereby implementing smooth transition of a screen-on ratio. The transition pulse may be 21 when the frame rate is 90 Hz or the transition pulse may be 16 when the frame rate is 120 Hz.

With reference to the embodiment corresponding to FIG. 6, for example, in this embodiment of this application, the state of the terminal device is exemplarily described based on a process in which a user turns on a mobile phone from a screen-off state, enters a home screen and adjusts brightness to a transition point, enters a video application to watch a video and adjusts the brightness to deviate from the transition point, returns to the home screen and adjusts the brightness to the transition point, and turns off a screen by using a power key.

S1: A user turns on a mobile phone from a screen-off state, backlight brightness before screen-on is 0, a frame rate is 120 Hz, and the terminal device is in the state D in this case. Screen brightness is not the transition point after screen-on, and the terminal device is still in the state D in this case.

S2: The user enters a home screen, the backlight brightness does not change, and the frame rate switches to 90 Hz (it is assumed that the home screen is always maintained at 90 Hz). In this case, the terminal device switches from the state D to the state B. The user adjusts the backlight brightness to the transition point, and the terminal device switches from the state B to the state A.

S3: The user enters a video application, the backlight brightness does not change, and the frame rate switches to 120 Hz. In this case, the terminal device switches from the state A to the state C. The user adjusts the brightness to deviate from the transition point when watching a video, and the terminal device switches from the state C to the state D in this case.

S4: The user returns to the home screen, the backlight brightness does not change, the frame rate switches to 90 Hz, and the terminal device switches from the state D to the state B in this case. The user adjusts the backlight brightness to the transition point, and the terminal device switches from the state B to the state A.

S5: The user triggers a power key to turn off a screen, the frame rate of the terminal device does not change, and the backlight brightness changes from the transition point to 0. In this case, the terminal device switches from the state A to the state B.

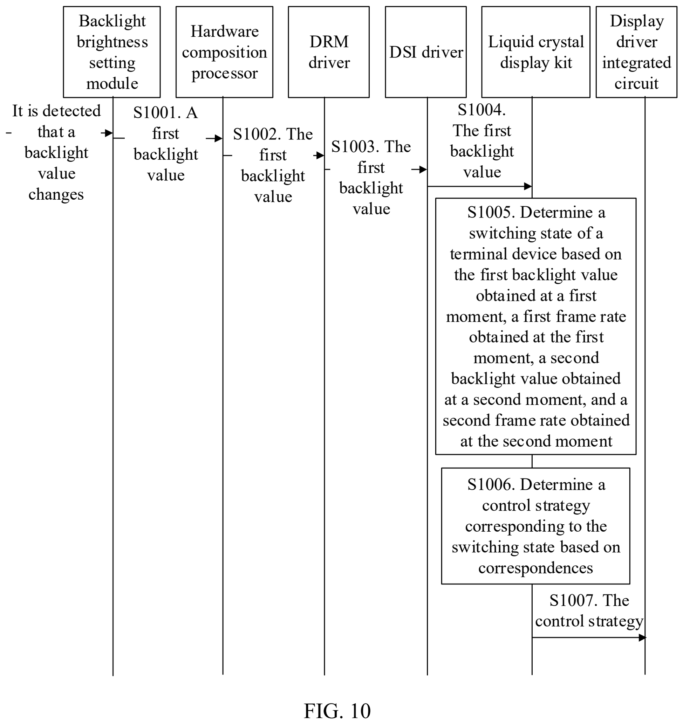

Based on the embodiment corresponding to FIG. 6, this application further provides a schematic diagram of module interaction in a backlight adjustment method. For specific interaction details, refer to an embodiment corresponding to FIG. 10.

For example, FIG. 10 is a schematic diagram of module interaction in a backlight adjustment method according to an embodiment of this application. In the embodiment corresponding to FIG. 10, the terminal device may include one or more of the following functional modules: a backlight brightness setting module, a hardware composition processor, a DRM driver, a DSI driver, a liquid crystal display kit, or a display driver integrated circuit.

As shown in FIG. 10, the backlight adjustment method may include the following steps.

S1001. The hardware composition processor obtains the first backlight value from the backlight brightness setting module when the backlight brightness setting module detects that a backlight value changes.

For a manner in which the backlight value changes, refer to the description in the step shown in S1001. Details are not described herein again.

S1002. The DRM driver obtains the first backlight value from the hardware composition processor.

S1003. The DSI driver obtains the first backlight value from the DRM driver.

S1004. The liquid crystal display kit obtains the first backlight value from the DSI driver.

S1005. The liquid crystal display kit determines a switching state of the terminal device based on the first backlight value obtained at the first moment, the first frame rate obtained at the first moment, the second backlight value obtained at the second moment, and the second frame rate obtained at the second moment.

The liquid crystal display kit is configured to buffer a backlight value corresponding to each frame and a frame rate corresponding to each frame, or buffer a frame rate generated when a frame rate changes and a backlight value generated when a backlight value changes, where the second frame rate and the second backlight value may be pre-buffered in the liquid crystal display kit.

In some embodiments, when the display composition system detects that the frame rate changes, the display composition system may send the changed frame rate to the liquid crystal display kit by using the hardware composition processor, the DRM driver, and the DSI driver, so that the liquid crystal display kit performs the step shown in S1005. Alternatively, when the display composition system does not detect that the frame rate changes, the liquid crystal display kit may obtain a frame rate of a previous frame (or a frame rate stored last time) from the buffer as the first frame rate.

For a process of determining the switching state of the terminal device based on the first backlight value, the first frame rate, the second backlight value, and the second frame rate, refer to the step shown in S603. Details are not described herein again.

S1006. The liquid crystal display kit determines a control strategy corresponding to the switching state based on the correspondences.

The correspondences may be buffered in the liquid crystal display kit.

S1007: The display driver integrated circuit obtains the control strategy from the liquid crystal display kit.

It may be understood that the liquid crystal display kit may be configured to store the correspondences, so that the corresponding control strategy is determined from the correspondences when the switching state is obtained.

Method 2: The terminal device determines the switching strategy for an extend frame rate and a pulse through scenario identification.

For example, FIG. 11 is a schematic flowchart of another backlight adjustment method according to an embodiment of this application. As shown in FIG. 11, the backlight adjustment method may include the following steps.

S1101. The terminal device obtains a first backlight value and a first frame rate.

For a process in which the terminal device obtains the first backlight value and the first frame rate, refer to the step shown in S601. Details are not described herein again.

S1102. The terminal device determines whether the first frame rate is an extend frame rate.

The extend frame rate may be 90 Hz. When the terminal device determines that the first frame rate is the extend frame rate, the terminal device may perform steps shown in S1106-S1110; or when the terminal device determines that the first frame rate is not the extend frame rate, the terminal device may perform steps shown in S1103-S1105.

In the steps shown in 1103-S1105, a frame rate of the terminal device may be 120 Hz.

S1103. The terminal device determines whether the first backlight value is less than or equal to a preset backlight value.

The terminal device may determine, by determining whether the first backlight value is less than or equal to the preset backlight value, whether the terminal device is in a PWM dimming strategy stage. For example, when the terminal device determines that the first backlight value is less than or equal to the preset backlight value, the terminal device may be determined to be in the PWM dimming strategy stage, and perform the step shown in S1104; or when the terminal device determines that the first backlight value is greater than the preset backlight value, the terminal device may be determined to be in a DC dimming strategy stage, and perform the step shown in S1105.

S1104: The terminal device delivers a first instruction.

The first instruction is used to deliver the preset backlight value and is used to instruct to set a pulse quantity to 16.

Usually, when the frame rate of the terminal device is 120 Hz, a pulse quantity corresponding to the PWM dimming stage may be 32. To implement smooth transition between a DC dimming strategy and a PWM dimming strategy, the terminal device may switch the pulse quantity from 32 to 16, to increase a screen-on ratio.

It may be understood that the terminal device may distinguish a dimming stage of the terminal device based on the preset backlight value, and deliver the preset backlight value and adjust the pulse quantity when the terminal device is in the PWM dimming stage, so that the adjusted pulse quantity can be used for smooth transition of the screen-on ratio.

S1105. The terminal device delivers the first backlight value.

S1106. The terminal device determines whether the first backlight value is less than or equal to a preset backlight value.

For a specific process in which the terminal device determines whether the first backlight value is less than or equal to the preset backlight value in the step shown in S1106, refer to the step shown in S1103. Details are not described herein again.

S1107. The terminal device delivers a third instruction.

The third instruction is used to deliver the preset backlight value and is used to instruct to set a pulse quantity to 21.

Usually, when the frame rate of the terminal device is 90 Hz, a pulse quantity corresponding to the PWM dimming stage may be 42. To implement smooth transition between a DC dimming strategy and a PWM dimming strategy, the terminal device may switch the pulse quantity from 42 to 21, to increase a screen-on ratio.

S1108. The terminal device determines whether a pulse quantity corresponding to the first frame rate is 42.

When the terminal device determines that the pulse quantity corresponding to the first frame rate is 42, the terminal device may perform a step shown in S1109; or when the terminal device determines that the pulse quantity corresponding to the first frame rate is not 42, the terminal device may perform a step shown in S1110.

S1109. The terminal device delivers a second instruction.

The second instruction is used to deliver the first backlight value and is used to instruct to set a pulse quantity to 42.

S1110. The terminal device delivers the first backlight value.

Based on this, the terminal device can deliver, based on a frame rate situation when delivering a transition backlight value, a transition pulse bound with the transition backlight value, to implement smooth transition of the screen-on ratio by using the transition pulse.

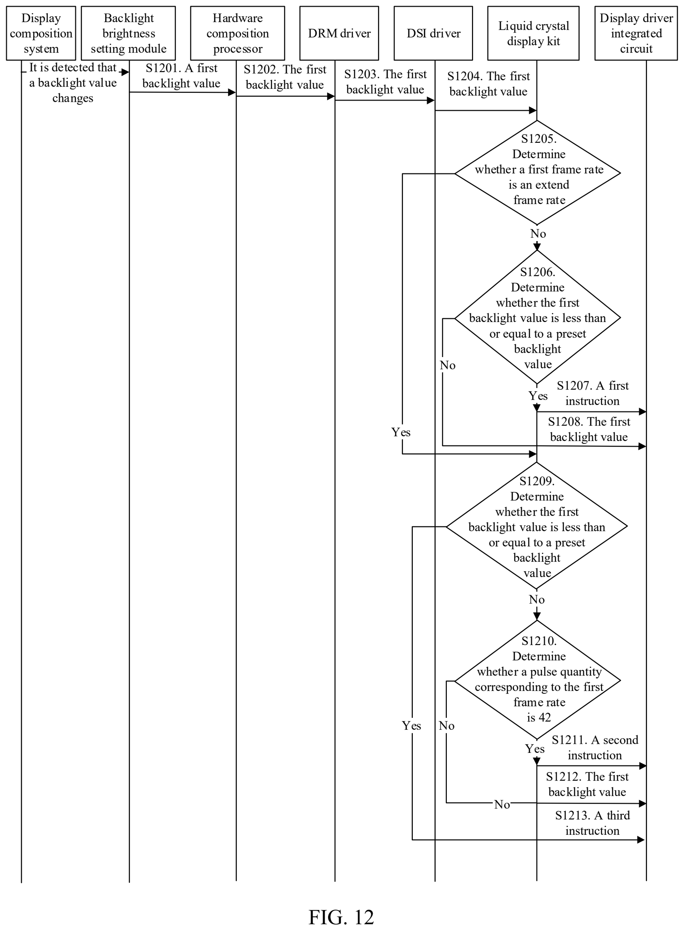

Based on the embodiment corresponding to FIG. 11, this application further provides a schematic diagram of module interaction in a backlight adjustment method. For specific interaction details, refer to an embodiment corresponding to FIG. 12.

For example, FIG. 12 is a schematic diagram of module interaction in another backlight adjustment method according to an embodiment of this application. In the embodiment corresponding to FIG. 12, the terminal device may include one or more of the following functional modules: a backlight brightness setting module, a hardware composition processor, a DRM driver, a DSI driver, a liquid crystal display kit, or a display driver integrated circuit. The terminal device may further include a display composition system (not shown in FIG. 12).

As shown in FIG. 12, the backlight adjustment method may include the following steps.

S1201. The hardware composition processor obtains the first backlight value from the backlight brightness setting module when the backlight brightness setting module detects that a backlight value changes.

For a manner in which the backlight value changes, refer to the description in the step shown in S601. Details are not described herein again.

S1202. The DRM driver obtains the first backlight value from the hardware composition processor.

S1203. The DSI driver obtains the first backlight value from the DRM driver.

S1204. The liquid crystal display kit obtains the first backlight value from the DSI driver.

S1205. The liquid crystal display kit determines whether the first frame rate is an extend frame rate.

When the liquid crystal display kit determines that the first frame rate is the extend frame rate, the terminal device may perform steps shown in S1209-S1213; or when the liquid crystal display kit determines that the first frame rate is not the extend frame rate, the terminal device may perform steps shown in S1206-S1208. For a specific process in which the liquid crystal display kit determines whether the first frame rate is the extend frame rate, refer to the step shown in S1102. Details are not described herein again.

In some embodiments, when the display composition system detects that the frame rate changes, the display composition system may send the changed frame rate to the liquid crystal display kit by using the hardware composition processor, the DRM driver, and the DSI driver, so that the liquid crystal display kit performs the step shown in S1205. Alternatively, when the display composition system does not detect that the frame rate changes, the liquid crystal display kit may obtain a frame rate of a previous frame (or a frame rate stored last time) from the buffer as the first frame rate.

S1206. The liquid crystal display kit determines whether the first backlight value is less than or equal to a preset backlight value.

When the liquid crystal display kit determines that the first backlight value is less than or equal to the preset backlight value, the terminal device may perform the step shown in S1207; or when the liquid crystal display kit determines that the first backlight value is greater than the preset backlight value, the terminal device may perform the step shown in S1208. For determining whether the first backlight value is less than or equal to the preset backlight value by the liquid crystal display kit, refer to the step shown in S1103. Details are not described herein again.

S1207: The display driver integrated circuit obtains a first instruction from the liquid crystal display kit.

The first instruction is used to deliver the preset backlight value and is used to instruct to set a pulse quantity to 16.

For example, the liquid crystal display kit may send a first feature value to the DSI driver while delivering the first instruction to the display driver integrated circuit, where the first feature value is used to indicate the DSI driver not to deliver the first backlight value.

In a possible implementation, the liquid crystal display kit may alternatively deliver the first instruction to the DSI driver, and the DSI driver continuously delivers the first instruction to the display driver integrated circuit. This is not limited in this embodiment of this application.

S1208: The display driver integrated circuit obtains the first backlight value from the liquid crystal display kit.

Specifically, the display driver integrated circuit may send a second feature value to the DSI driver, where the second feature value is used to indicate the DSI driver to deliver the first backlight value. Therefore, the DSI driver may deliver the first backlight value to the display driver integrated circuit.

S1209. The liquid crystal display kit determines whether the first backlight value is less than or equal to a preset backlight value.

When the liquid crystal display kit determines that the first backlight value is less than or equal to the preset backlight value, the terminal device may perform the step shown in S1213; or when the liquid crystal display kit determines that the first backlight value is greater than the preset backlight value, the terminal device may perform the step shown in S1210. For determining whether the first backlight value is less than or equal to the preset backlight value by the liquid crystal display kit, refer to the step shown in S1103. Details are not described herein again.

S1210. The liquid crystal display kit determines whether a pulse quantity corresponding to the first frame rate is 42.

When the liquid crystal display kit determines that the pulse quantity corresponding to the first frame rate is 42, the liquid crystal display kit may perform a step shown in S1211; or when the liquid crystal display kit determines that the pulse quantity corresponding to the first frame rate is not 42, the liquid crystal display kit may perform a step shown in S1212. For a specific process in which the liquid crystal display kit determines whether the pulse quantity corresponding to the first frame rate is 42, refer to the step shown in S1108. Details are not described herein again.

S1211: The display driver integrated circuit obtains a second instruction from the liquid crystal display kit.

The second instruction is used to deliver the first backlight value and is used to instruct to switch a frame rate to a basic frame rate.

S1212: The display driver integrated circuit obtains the first backlight value from the liquid crystal display kit.

Specifically, the display driver integrated circuit may send a second feature value to the DSI driver, where the second feature value is used to indicate the DSI driver to deliver the first backlight value. Therefore, the DSI driver may deliver the first backlight value to the display driver integrated circuit.

S1213: The display driver integrated circuit obtains a third instruction from the liquid crystal display kit.

The third instruction is used to deliver the preset backlight value and is used to instruct to set a pulse quantity to 21.

It may be understood that, in this embodiment of this application, a problem that a DDIC side cannot automatically switch to the transition backlight value representing the transition pulse is resolved by using a software solution. This addresses user pain points caused by characteristics of a high-frequency PWM dimming solution. In the present invention, a state switching scenario is distinguished by identifying real-time backlight value and frame rate changes, and special processing is performed for a specific scenario, to ensure correct pulse switching when the backlight value changes and ensure that a screen operates at a correct refresh rate when a frame rate switching behavior occurs.

The backlight adjustment method provided in the embodiments of this application may be applied to any terminal device that supports a high-frequency PWM dimming panel and whose DDIC cannot support an autonomous pulse switching manner, for example, a display screen, a laptop, a tablet computer, or a mobile phone terminal. Therefore, in a scenario in which a screen supports a high-frequency PWM dimming characteristic, a corresponding switching manner configured for backlight and a refresh rate of the panel of the screen is implemented.

It should be noted that user information (including but not limited to user equipment information, user personal information, and the like) and data (including but not limited to data used for analysis, stored data, displayed data, and the like) involved in this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

With reference to the foregoing descriptions of the embodiments corresponding to FIG. 6-FIG. 12, an embodiment of this application provides a schematic flowchart of still another backlight adjustment method. Specifically, the backlight adjustment method may include the following steps.

S1301. A terminal device displays an nth image frame.

When the nth image frame is displayed, a backlight value of the terminal device is a first backlight value, and a pulse quantity within a unit time in a pulse adjustment PWM signal used by the terminal device for backlight adjustment is a first pulse quantity.

A state of the terminal device when the nth image frame is displayed is the first state described in the embodiments of this application.

S1302. The terminal device displays an (n+1)th image frame.

When the (n+1)th image frame is displayed, a backlight value of the terminal device is a second backlight value, and a pulse quantity within a unit time in a PWM signal used by the terminal device for backlight adjustment is a second pulse quantity.

A state of the terminal device when the (n+1)th image frame is displayed is the second state described in the embodiments of this application. A process in which the terminal device adjusts the first pulse quantity to the second pulse quantity may be determined by the terminal device from a first correspondence based on the first state and the second state.

A process of implementing state switching of the terminal device based on S1301-S1302 may correspond to ② or ⑥ in the eight switching states described in the embodiments of this application.

The second pulse quantity is less than the first pulse quantity, the second backlight value is not equal to the first backlight value, the second backlight value belongs to a preset backlight interval, a minimum value of the preset backlight interval is a minimum backlight value that is allowed to be adjusted when backlight adjustment is performed through direct current DC dimming, and a maximum value of the preset backlight interval is a maximum backlight value that is allowed to be adjusted when backlight adjustment is implemented through PWM dimming.

In a possible implementation, the method further includes: displaying an (n+2)th image frame, where when the (n+2)th image frame is displayed, a backlight value of the terminal device is a third backlight value, a pulse quantity within a unit time in a PWM signal used by the terminal device for backlight adjustment is a third pulse quantity, the third pulse quantity is greater than the second pulse quantity, the second backlight value is not equal to the third backlight value, and the third backlight value does not belong to the preset backlight interval.

It may be understood that a state switching process of the terminal device in a process in which the terminal device switches from the (n+1)th image frame to the (n+2)th image frame may correspond to ① or ⑤ in the eight switching states described in the embodiments of this application.

In a possible implementation, a frame rate of the terminal device is a first frame rate when the nth image frame is displayed; a frame rate of the terminal device is a second frame rate when the (n+1)th image frame is displayed; a frame rate of the terminal device is a third frame rate when the (n+2)th image frame is displayed; the first frame rate is equal to the third frame rate; and the method further includes: displaying an (n+3)th image frame, where when the (n+3)th image frame is displayed, a backlight value of the terminal device is a fourth backlight value, a pulse quantity within a unit time in a PWM signal used by the terminal device for backlight adjustment is a fourth pulse quantity, and a frame rate of the terminal device is a fourth frame rate; and the fourth frame rate is less than the third frame rate, the fourth pulse quantity is greater than the third pulse quantity, the fourth backlight value is not equal to the third backlight value, and the fourth backlight value belongs to the preset backlight interval.

It may be understood that a state switching process of the terminal device in a process in which the terminal device switches from the (n+2)th image frame to the (n+3)th image frame may correspond to ④ in the eight switching states described in the embodiments of this application.

In a possible implementation, the third frame rate is in a first frame rate interval, the fourth frame rate is in a second frame rate interval, the first frame rate interval includes 120 hertz and does not include 90 hertz, and the second frame rate interval includes 90 hertz and does not include 120 hertz.

The third frame rate may be a basic frame rate described in embodiments of this application, and the fourth frame rate may be an extend frame rate described in the embodiments of this application.

In a possible implementation, the method further includes: displaying an (n+4)th image frame, where when the (n+4)th image frame is displayed, a backlight value of the terminal device is a fifth backlight value, a pulse quantity within a unit time in a PWM signal used by the terminal device for backlight adjustment is a fifth pulse quantity, the fifth backlight value belongs to the preset backlight interval, and the fifth pulse quantity is equal to the fourth pulse quantity.

It may be understood that the state of the terminal device may not change in a process in which the terminal device switches from the (n+3)th image frame to the (n+4)th image frame.

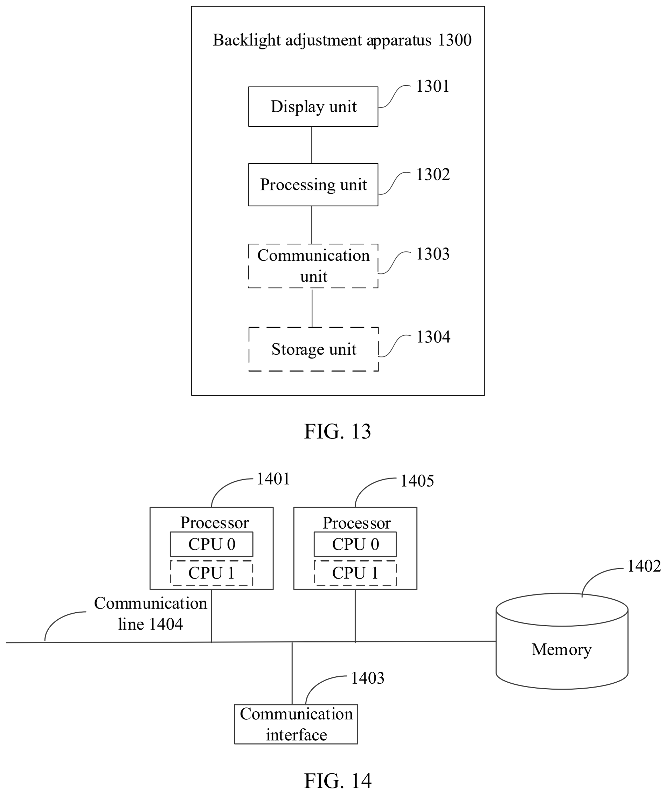

The method provided in the embodiments of this application is described above with reference to FIG. 6-FIG. 12. An apparatus for performing the method provided in the embodiments of this application is described below. As shown in FIG. 13, FIG. 13 is a schematic diagram of a structure of a synchronous playing apparatus according to an embodiment of this application. The synchronous playing apparatus may be a terminal device in the embodiments of this application, or may be a chip or a chip system in the terminal device.

As shown in FIG. 13, a backlight adjustment apparatus 1300 may be used in a communication device, a circuit, a hardware component, or a chip, and the backlight adjustment apparatus 1300 includes: an obtaining unit 1301 and a processing unit 1302. The obtaining unit 1301 is configured to support a backlight adjustment method in performing a step of obtaining information. The processing unit 1302 is configured to support the backlight adjustment apparatus 1300 in performing a step of processing the information.

In a possible implementation, the backlight adjustment apparatus 1300 may further include a communication unit 1303. The communication unit 1303 is configured to support the backlight adjustment apparatus 1300 in performing a step of receiving a message, a step of sending a message, or the like.

Specifically, the processing unit 1302 may be integrated with the obtaining unit 1301, and the processing unit 1302 and the obtaining unit 1301 may communicate with each other.

In a possible implementation, the backlight adjustment apparatus 1300 may further include: a storage unit 1304. The storage unit 1304 may include one or more memories, and the memory may be a component configured to store a program or data in one or more devices or circuits.

The storage unit 1304 may exist independently, and is connected to the processing unit 1302 by using a communication bus. Alternatively, the storage unit 1304 may be integrated with the processing unit 1302.

For example, the backlight adjustment apparatus 1300 may be the chip or the chip system in the terminal device in the embodiments of this application, and the storage unit 1304 may store computer-executable instructions of the method in the terminal device, so that the processing unit 1302 performs the method in the terminal device in the foregoing embodiments. The storage unit 1304 may be a register, a cache, a random access memory (random access memory, RAM), or the like, and the storage unit 1304 may be integrated with the processing unit 1302. The storage unit 1304 may be a read-only memory (read-only memory, ROM) or another type of static storage device that can store static information and instructions. The storage unit 1304 may be independent of the processing unit 1302.

In a possible implementation, the backlight adjustment apparatus 1300 may further include a communication unit 1303. The communication unit 1303 is configured to support the backlight adjustment apparatus 1300 in interacting with another device. For example, the communication unit 1303 may be a communication interface or an interface circuit when the backlight adjustment apparatus 1300 is the terminal device. The communication unit 1303 may be the communication interface when the backlight adjustment apparatus 1300 is the chip or the chip system in the terminal device. For example, the communication interface may be an input/output interface, a pin, a circuit, or the like.

The apparatus in this embodiment may correspondingly be configured to perform the steps performed in the foregoing method embodiments. Implementation principles and technical effects of the apparatus and the foregoing method embodiments are similar and are not described herein again.

FIG. 14 is a schematic diagram of a hardware structure of another terminal device according to an embodiment of this application.

The terminal device may include a processor 1401, a communication line 1404, and at least one communication interface (for example, a communication interface 1403 is used as an example for description in FIG. 14).

The processor 1401 may be a general-purpose central processing unit (central processing unit, CPU), a microprocessor, an application-specific integrated circuit (application-specific integrated circuit, ASIC), or one or more integrated circuits for controlling program execution in the solutions in this application.

The communication line 1404 may include a circuit for transmitting information between the foregoing components.

The communication interface 1403 uses any apparatus such as a transceiver to communicate with another device or a communication network, such as an Ethernet or a wireless local area network (wireless local area networks, WLAN).

Possibly, the terminal device may further include a memory 1402.

The memory 1402 may be a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto. The memory may exist independently, and is connected to the processor by using the communication line 1404. The memory may alternatively be integrated with the processor.

The memory 1402 is configured to store computer-executable instructions for performing the solution in this application, and the processor 1401 controls execution. The processor 1401 is configured to execute the computer-executable instructions stored in the memory 1402, to implement the method provided in the embodiments of this application.

Possibly, the computer-executable instructions in this embodiment of this application may also be referred to as application program code. This is not specifically limited in this embodiment of this application.

In a specific implementation, in an embodiment, the processor 1401 may include one or more CPUs, for example, a CPU 0 and a CPU 1 in FIG. 14.

In a specific implementation, in an embodiment, the terminal device may include a plurality of processors, for example, a processor 1401 and a processor 1405 in FIG. 14. Each of these processors may be a single-core (single-CPU) processor or a multi-core (multi-CPU) processor. The processor herein may be one or more devices, circuits, and/or processing cores configured to process data (for example, computer program instructions).

In the foregoing embodiments, instructions stored in the memory for execution by the processor may be implemented in a form of a computer program product. The computer program product may be written in the memory in advance, or may be downloaded and installed in the memory in a form of software.

The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium that the computer can store, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The method described in the foregoing embodiments may be completely or partially implemented by using software, hardware, firmware, or any combination thereof. The computer-readable medium may include a computer storage medium and a communication medium, and may further include any medium that enables a computer program to be transmitted from one place to another place. The storage medium may be any target medium accessible to a computer.

In a possible design, the computer-readable medium may include a compact disc read-only memory (compact disc read-only memory, CD-ROM), a RAM, a ROM, an EEPROM, or another optical disc storage; and the computer-readable medium may include a magnetic disk memory or another magnetic disk storage device. In addition, any connection line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc. The magnetic disk usually reproduces data in a magnetic manner, and the optical disc reproduces data optically by using laser.

The foregoing combinations should also be included in the scope of the computer-readable medium. The foregoing descriptions are merely specific implementations of the present invention. However, the protection scope of the present invention is not limited thereto. Any change or replacement readily figured out by a person skilled in the art within the technical scope disclosed in the present invention shall fall within the protection scope of the present invention. Therefore, the protection scope of the present invention shall be subject to the protection scope of the claims.

## Claims

1. A backlight adjustment method, applied to a terminal device, wherein the method comprises:
displaying an nth image frame, wherein when the nth image frame is displayed, a backlight value of the terminal device is a first backlight value, and a pulse quantity within a unit time in a pulse modulation PWM signal used by the terminal device for backlight adjustment is a first pulse quantity; and
displaying an (n+1)th image frame, wherein when the (n+1)th image frame is displayed, a backlight value of the terminal device is a second backlight value, and a pulse quantity within a unit time in a PWM signal used by the terminal device for backlight adjustment is a second pulse quantity; and
the second pulse quantity is less than the first pulse quantity, the second backlight value is not equal to the first backlight value, the second backlight value belongs to a preset backlight interval, a minimum value of the preset backlight interval is a minimum backlight value that is allowed to be adjusted to when backlight adjustment is performed through direct current DC dimming, and a maximum value of the preset backlight interval is a maximum backlight value that is allowed to be adjusted to when backlight adjustment is implemented through PWM dimming.

2. The method according to claim 1, wherein the method further comprises:
displaying an (n+2)th image frame, wherein when the (n+2)th image frame is displayed, a backlight value of the terminal device is a third backlight value, a pulse quantity within a unit time in a PWM signal used by the terminal device for backlight adjustment is a third pulse quantity, the third pulse quantity is greater than the second pulse quantity, the second backlight value is not equal to the third backlight value, and the third backlight value does not belong to the preset backlight interval.

3. The method according to claim 2, wherein a frame rate of the terminal device is a first frame rate when the nth image frame is displayed; a frame rate of the terminal device is a second frame rate when the (n+1)th image frame is displayed; a frame rate of the terminal device is a third frame rate when the (n+2)th image frame is displayed; the first frame rate is equal to the third frame rate; and the method further comprises:
displaying an (n+3)th image frame, wherein when the (n+3)th image frame is displayed, a backlight value of the terminal device is a fourth backlight value, a pulse quantity within a unit time in a PWM signal used by the terminal device for backlight adjustment is a fourth pulse quantity, and a frame rate of the terminal device is a fourth frame rate; and
the fourth frame rate is less than the third frame rate, the fourth pulse quantity is greater than the third pulse quantity, the fourth backlight value is not equal to the third backlight value, and the fourth backlight value belongs to the preset backlight interval.

4. The method according to claim 3, wherein the third frame rate is in a first frame rate interval, the fourth frame rate is in a second frame rate interval, the first frame rate interval comprises 120 hertz and does not comprise 90 hertz, and the second frame rate interval comprises 90 hertz and does not comprise 120 hertz.

5. The method according to any one of claims 3 or 4, wherein the method further comprises:
displaying an (n+4)th image frame, wherein when the (n+4)th image frame is displayed, a backlight value of the terminal device is a fifth backlight value, a pulse quantity within a unit time in a PWM signal used by the terminal device for backlight adjustment is a fifth pulse quantity, the fifth backlight value belongs to the preset backlight interval, and the fifth pulse quantity is equal to the fourth pulse quantity.

6. The method according to any one of claims 1-5, wherein the terminal device comprises a liquid crystal display kit, and the method comprises:
adjusting, by the liquid crystal display kit, the first pulse quantity to the second pulse quantity based on the first backlight value and the second backlight value; and
delivering, by the liquid crystal display kit, the second pulse quantity to a display driver integrated circuit.

7. The method according to any one of claims 1-6, wherein the terminal device is a device supporting high-frequency PWM dimming of 3840 Hz.

8. A backlight adjustment apparatus, wherein the apparatus comprises a display unit and a processing unit;
the display unit is configured to display an nth image frame, wherein when the nth image frame is displayed, a backlight value of a terminal device is a first backlight value, and a pulse quantity within a unit time in a pulse adjustment PWM signal used by the terminal device for backlight adjustment is a first pulse quantity; and
the display unit is further configured to display an (n+1)th image frame, wherein when the (n+1)th image frame is displayed, a backlight value of the terminal device is a second backlight value, and a pulse quantity within a unit time in a PWM signal used by the terminal device for backlight adjustment is a second pulse quantity; and
the second pulse quantity is less than the first pulse quantity, the second backlight value is not equal to the first backlight value, the second backlight value belongs to a preset backlight interval, a minimum value of the preset backlight interval is a minimum backlight value that is allowed to be adjusted when backlight adjustment is performed through direct current DC dimming, and a maximum value of the preset backlight interval is a maximum backlight value that is allowed to be adjusted when backlight adjustment is implemented through PWM dimming.

9. A terminal device, comprising a memory, a processor, and a computer program that is stored in the memory and that is capable of running on the processor, wherein when the processor executes the computer program, the terminal device is enabled to perform the method according to any one of claims 1-8.

10. A computer-readable storage medium, wherein the computer-readable storage medium stores a computer program, and when the computer program is executed by a processor, a computer is enabled to perform the method according to any one of claims 1-8.
